(19) Europäisches Patentamt
European Patent Office
Office européen des brevets

(11) Publication number: **0 024 128**
**B1**

(12) **EUROPEAN PATENT SPECIFICATION**

(45) Date of publication of patent specification: **01.02.84**

(21) Application number: **80302499.1**

(22) Date of filing: **23.07.80**

(51) Int. Cl.[3]: **C 07 F 9/52,** C 07 C 121/32, B 01 J 31/02, C 07 F 9/46, C 07 F 9/48

(54) **Phosphorylation process.**

(30) Priority: **14.08.79 GB 7928307**

(43) Date of publication of application:
**25.02.81 Bulletin 81/8**

(45) Publication of the grant of the patent:
**01.02.84 Bulletin 84/5**

(84) Designated Contracting States:
**BE DE FR GB IT NL**

(56) References cited:
**EP - A - 0 008 164**
**GB - A - 1 469 003**
**US - A - 3 974 217**

**JOURNAL OF ORGANIC CHEMISTRY, Vol. 40, No. 3, 1975 J.A. MILES et al. "A General Route to Methoxy-substitued Arylphosphonous Dichlorides via Mild Lewis Acid Catalysts"**

(73) Proprietor: **IMPERIAL CHEMICAL INDUSTRIES PLC**
**Imperial Chemical House Millbank**
**London SW1P 3JF (GB)**

(72) Inventor: **Cozens, Ross James**
**38 Downs Road**
**Runcorn Cheshire (GB)**
Inventor: **Hogan, Philip John**
**25 Cheltenham Crescent**
**Runcorn Cheshire (GB)**
Inventor: **Lalkham, Michael John**
**3 Dudley Avenue**
**Runcorn Cheshire (GB)**

(74) Representative: **Hartley, Kenneth et al,**
**Imperial Chemical Industries Limited Legal Department, Patents Thames House North Millbank**
**London SW1P 4QG (GB)**

**EP 0 024 128 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Phosphorylation Process

This invention relates to a phosphorylation process and to superacid catalysts suitable for use therein. More particularly, it relates to a process for the preparation of aryl-substituted phosphonous dihalides which serve as precursors for certain phosphonites and phosphinites which are useful as catalysts in the dimerisation of acrylonitrile.

The aryl-substituted phosphonous dihalides may be prepared by a phosphorylation process based on a Friedel-Crafts reaction in which the aromatic starting material, for example benzene or a substituted benzene, is reacted with a phosphorus trihalide, usually phosphorus trichloride, in the presence of a Lewis acid "catalyst" such as aluminium chloride, ferric chloride, stannic chloride, or zinc chloride. The resulting phosphonous dihalide may then be converted to the corresponding phosphonite by reacting with an alcohol and a base, or converted to the corresponding phosphinite by first heating with a disproportionation catalyst, for example zinc chloride, to form the phosphinous monohalide, with evolution of phosphorus trihalide, followed by alcoholising of the monohalide. The aforesaid preparation of aryl substituted phosphonous dihalides, and their subsequent conversion to phosphonites and phosphinites is described in our European Patent Application No. 79301358.2. Such phosphonites and phosphinites are useful as catalysts for the dimerisation of acrylonitrile to predominantly 1,4-dicyanobutenes by the process described and claimed in our UK Patents 1,546,807, 1,547,432 and in European Patent Application 79301358.2. The aforesaid process comprises contacting acrylonitrile, substantially free of water and stabilisers of the phenolic type, with the phosphonite or phosphinite catalyst, the acrylonitrile being dissolved in an inert organic solvent capable of donating protons and optionally an inert non-hydroxylic co-solvent.

A major disadvantage of conventinal Friedel-Crafts Lewis acid catalysts arises because of the necessity to use them in excess of molar amounts. Moreover, the catalyst generally forms stable complexes with the phosphonous dihalide product, and the subsequent decomposition required to obtain the phosphonous dihalide from the complex generally results in total loss of catalyst, that is, the catalyst is non-recoverable. Although the formation of complexes between the phosphonous dihalide and the catalyst can be overcome by adding a phosphorus oxychloride at the end of the reaction (as described by Buchner and Lockhart J.A.C.S. *73*, 755, (1951)) thereby forming a stable and filterable complex with the Lewis acid, or by the addition of a base, for example, pyridine, to break down the phosphonous dihalide/catalyst complex, neither of these approaches leads to the regeneration of the complexed catalyst. Moreover, the use of a phosphorus oxyhalide gives an additional filtration step which adds to the overall cost of the process.

A serious disadvantage of using the Friedel-Crafts route to aryl substituted phosphonous dihalides arises from the low regioselectivity of Lewis acids as phosphorylation catalysts, so that isomeric mixtures are often formed. For example, R. Schmutzler, J. Inorganic Nuclear Chemistry, *25* 335, (1963) shows that toluene reacts with phosphorus trichloride in the presence of aluminium chloride, using the reaction conditions described by Buchner and Lockhard J.A.C.S., *73*, 755, (1951)), to give the para-isomer and the meta-isomer in approximately equal proportions. The para-isomer is the preferred isomer for our purpose since the para-aryl substituted phosphinites and phosphonites are the preferred catalysts for use in the dimerisation of acrylonitrile referred to previously. Furthermore, the conventional Friedel-Crafts route to alkoxy-substituted phenyl phosphonous dihalides frequently results in dealkylation, except when using mild Lewis Acid catalysts, for example stannic chloride and ferric chloride, which give moderately high yields but require long reaction periods, e.g. 1—3 days (as described by J. A. Miles, M. T. Beery and K. W. Ralts, J. Organic Chemistry, *40*, 343, (1975)).

Various catalysts have been used in Friedel-Crafts acylation and alkylation of aromatic compounds as an alternative to Lewis acids. It is known, for instance, from R. D. Howell and J. D. McCown, Chemical Reviews, *77*, 72—73, (1977) that trifluoromethanesulphonic acid and related sulphonic acids are Friedel-Crafts acylating agents, for example in the acylation of aromatic compounds U.S. Patent 3,708,553 (G. A. Olah assigned to Esso Research & Engineering Company) describes the alkylation of paraffinic and/or alkyl substituted aromatic hydrocarbons with olefins in the presence of catalysts comprising a Lewis acid in combination with fluorosulphonic acid (fluorosulphuric acid) or trifluoromethane sulphonic acid. G. A. Olah, Synthesis, 672, (1978) describes the catalysed acylation of benzene and substituted benzenes with aroyl chlorides and anhydrides using a solid perfluorinated resinsulphonic acid as catalyst. Up to now, none of these catalytic species has been applied to phosphorylation reactions.

We have now found that many of the disadvantages associated with phosphorylation by the Friedel-Crafts route when using conventional Lewis acid catalysts can in fact be overcome by using superacid catalysts.

According to our invention we provide a process for the preparation of an aromatic phosphonous dihalide which comprises reacting an aromatic compound with a phosphorus trihalide in the presence of a superacid, said superacid being an acid having a Hammett acidity function, Ho, which is more negative than −12.

A discussion on Hammett acidity functions, Ho, is to be found, for example, in the article by M. A.

Paul and F. A. Long, Chemical Reviews, *57*, 1, (1957). The value of Ho provides a quantitative measure of the relative proton-donating abilities of acids, increasingly negative values corresponding to higher acidity.

The process of the present invention is especially applicable to the preparation of compounds of the general formula

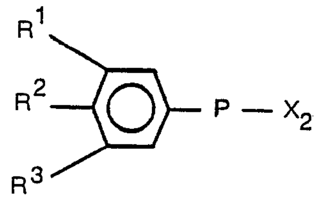

wherein $R^1$, $R^2$ and $R^3$ are electron-donating substituents or hydrogen atoms, or either $R^1$ or $R^3$ forms part of a fused alicyclic ring with $R^2$, and wherein X is a halogen atom, which process comprises contacting the compound

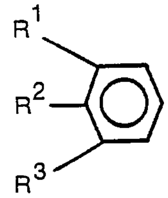

with a phosphorus trihalide in the presence of a superacid.

By "electron-donating substituent" we mean a substituent of the aromatic nucleus which gives rise to a negative Hammett $\sigma$ constant.

A discussion on Hammett $\sigma$ constants and a table showing values for most common substituents is to be found in an Article by Clark & Perrin in Quarterly Reviews, vol. 18, 1964 pp 295—320.

Examples of suitable electron-donating substituents include aloxy groups e.g. methoxy, ethoxy, isopropoxy and tert-butoxy; alkyl groups e.g. methyl, ethyl and propyl. The alkoxy and alkyl groups preferably contain from 1 to 8 carbon atoms, especially from 1 to 5 carbon atoms.

The phosphorus halide may be the corresponding fluoride, chloride, bromide or iodide, but it is preferred to use phosphorus trichloride.

Suitable superacids include certain Brönsted monomeric acids, for example pyrosulphuric acid $H_2S_2O_7$; halogenosulphonic acids, for example fluorosulphonic acid $FSO_3H$, chlorosulphonic acid, $ClSO_3H$; and partially or completely halogenated sulphonic acids $XCF_2SO_3H$, where X is F (i.e. trifluoromethane sulphonic acid $CF_3SO_3H$), Cl, $C_nF_{2n+1}$ where n is, for example, 1 to 12, $H(CF_2CF_2)_n$ where n is for example 1 to 5 and $(CF_3)_2$—CF—. Suitable superacids further include certain Brönsted polymeric acids, for example solid perfluorinated resinsulphonic acids. A suitable solid perfluorinated resinsulphonic acid which is manufactured by Du Pont Company under the trade mark NAFION, is a copolymer of tetrafluoroethylene and a fluorine-containing vinyl ether, the copolymer containing sulphonic acid groups.

Alternatively, the superacid may comprise a combination of a Brönsted monomeric superacid or a Brönsted monomeric acid which is not a superacid (for example hydrofluoric acid) with a Lewis acid, provided that the combination leads to an acid composition having a Hammett acidity, Ho, which is more negative than −12. The proportion of Lewis acid to Brönsted acid is preferably within the range 1:10 to 1:100. Typical Lewis acids which may be used in the aforesaid combination include those having the formula $MX_n$, where M is an element of Groups IIIB, IVA, V or VIA of the Periodic Table, X is halogen, preferably fluorine and n varies from 3 to 6.

(All references to the Periodic Table are to the version of the Periodic Table of the Elements printed inside the back cover of "Advanced Inorganic Chemistry" by F. A. Cotton and G. Wilkinson 3rd Edition, Interscience Publishers 1972).

Suitable superacids, comprising combinations of Brönsted superacids or Brönsted acids which are not superacids with Lewis acids include fluorosulphonic acid with titanium tetrafluoride, niobium pentafluoride, tantalum pentafluoride, antimony pentafluoride, antimony pentafluoride — sulphur trioxide and molybdenum hexafluoride; chlorosulphonic acid with gallium trichloride, and antimony pentafluoride; trifluoromethanesulphonic acid with titanium tetrafluoride, zirconium tetrafluoride, vanadium pentafluoride, tantalum pentafluoride, arsenic pentafluoride, and antimony pentafluoride; and hydrofluoric acid with boron trifluoride, niobium pentafluoride and tantalum pentafluoride.

Reaction conditions employed when Brönsted monomeric acids or Brönsted monomeric acid-Lewis acid combinations are used as catalysts involve refluxing the superacid, the organic aromatic compound and the phosphorus trihalide in the absence of a solvent. The reaction time can vary widely and is generally chosen such that both the conversion of the aromatic compound and the yield of the

desired phosphorylated product are optimised. Reaction times are within the range 1 to 24 hours, but more commonly in the range 4 to 10 hours. Following the period of reflux, the reaction mixtures are allowed to cool to ambient temperature, and are then treated by one of three procedures, the first of which is employed when the recovery of the Brönsted acid component is not desired, and the remaining two of which can be applied, separately or together, when either partial or complete recovery of the Brönsted acid component is required.

(i) Residual acid catalyst, unreacted aromatic compound and unreacted phosphorus trihalide are all removed under reduced pressure, and the phosphorylated product subsequently isolated by vacuum distillation.

(ii) A hydrocarbon solvent is added to the cooled reaction product mixture to induce the separation of the superacid in a heavy phase. This procedure could form the basis of a continuous recycling process in which the heavy phase is returned to the reaction mixture. The light phase, after separation, is concentrated by removal of the hydrocarbon solvent, unreacted aromatic compound and phosphorus trihalide at reduced pressure, and the phosphorylated products can then be isolated by vacuum distillation. Hydrolysis of the distillation residues using dilute hydrochloric acid liberates as the hydrates any Brönsted acids which had been complexed, together generally with the appropriate phosphinic acid. The acid hydrate can be readily converted to the anhydrous form by distillation from phosphorus pentoxide. For example, M. and L. F. Fieser in "Reagents for Organic Synthesis", Vol. 4, 1974, Wiley, p. 532 present details for the preparation of anhydrous trifluoromethanesulphonic acid from the hydrate. Suitable aliphatic, cycloaliphatic or aromatic hydrocarbon solvents are liquids having dielectric constant less than 3, such as n-pentane, methylhexane, cyclohexane, ethylbenzene and the like, and in certain cases the aromatic compound itself. The hydrocarbon solvent is generally added in a volume excess over the reaction mixture of from 1.5 to 5, but preferably 2 to 3.

(iii) Residual superacid in the reaction product mixture is complexed with a suitable organic base. The resultant complex is removed from the unreacted aromatic compound and phosphorus trihalide and the phosphorylated products either as a precipitated solid or as a separated oil, and is subsequently hydrolysed using, for example, de-ionised water, whereupon free Brönsted superacid is regenerated as its hydrate. The precipitation or separation of the complex is aided by the addition of a hydrocarbon solvent, as specified in (ii) above and the solvent is added in a volume equal approximately to that of the reaction mixture. This procedure forms the basis of a continuous recycling process. Unreacted aromatic compound and phosphorus trihalide are removed from the light phase and the phosphorylation products are subsequently isolated by vacuum distillation. Hydrolysis of the distillation residues using dilute hydrochloric acid liberates any complexed acids as their hydrates, together generally with the appropriate phosphinic acid. Suitable organic bases include tertiary aliphatic and aromatic amines such as triethylamine, diethylaniline, pyridine and the like. The organic base is added in a molar excess of 1.2—2 over the total amount of superacid catalyst in the reaction mixture. This procedure generally results in higher recoveries of Brönsted superacids than procedure (ii) above.

Reaction conditions employed when solid perfluorinated resin-sulphonic acids are used involve contacting a supported bed of the superacid with a mixture of the aromatic compound and the phosphorus halide at a reflux temperature in the absence of solvent. Reaction times vary widely and are again chosen so that the conversion of the aromatic compound and the yield of the desired phosphorylated product are optimised. Reaction times are within the range 5 to 30 hours, but are preferably within the range 8 to 18 hours. Following the period of reflux the reaction mixture is allowed to cool and the bed of solid superacid is washed free of phosphorylated products using an excess of the aromatic compound. The quantity of the aromatic compound used to wash the acid is generally of a volume equal to one-third that of the reaction mixture. The acid is then re-activated by first washing with methanol to remove excess reagents and products, then hydrolysing using dilute hydrochloric acid, thoroughly washing with de-ionised water and finally vacuum drying. This procedure forms the basis of a continuous recycling process. Phosphorylated products are isolated by vacuum distillation from the reaction mixture after excess aromatic compound and phosphorus halide have been removed under reduced pressure.

While association of these superacid catalysts with the phosphonous dihalide products does occur to variable extents to form catalyst/product complexes, the complexes are readily broken down by the addition of water or a dilute acid, thereby leading to catalyst regeneration. This avoids the loss of catalyst which results from the addition of a phosphorus oxyhalide in conventional Friedel-Crafts catalyst to cause the break down of catalyst/product complexes.

The proportion of superacid used in the preparation of the phosphonous dihalides is conveniently in the range 0.05 to 0.25, preferably 0.05 to 0.15 moles of superacid per mole of aromatic compound starting material. When the superacid is a resin sulphonic acid, the molar loading refers to the number of moles of sulphonic acid groups ($—SO_3H$) per 100 mole of aromatic compound in the reaction mixture. Typical yields are 85 to 95% for conversions of from 5 to 60% but more typically 10 to 30%. The yields employing relatively low mole percentages of superacid are comparable with the yields obtained with conventional Lewis acid catalysts which typically are used in a slight molar excess relative to the aromatic compound starting material.

The use of superacid catalysts advantageously leads to greater regioselectivity relative to using

conventional Lewis acid catalysts in the phosphorylation of substituted aromatic compounds. For example, the reaction of toluene and phosphorus trichloride in the presence of trifluoromethanesulphonic acid yields products in the molar ratio of 90% para- and 10% orthotolyl phosphonous dichloride, with negligible formation of meta-isomer. In contrast, the Lewis acid catalysts can yield the meta and para isomers in approximately equal proportions.

The process according to the invention offers a general route to alkoxy substituted phosphonous dihalides.

The aromatic phosphonous dihalides prepared according to the process of the invention are useful as precursors for the preparation of phosphonites and phosphonites useful as catalysts for the dimerisation of acrylonitrile.

The invention is illustrated by the following Examples.

Examples 1, 2 and 3 illustrate the use of a Brönsted superacid (trifluoromethane sulphonic acid) to catalyse the phosphorylation of o-xylene, toluene and anisole, with isolation of the phosphorylation products.

Example 4 illustrates the use of a Brönsted superacid/Lewis acid combination (trifluoromethane sulphonic acid and antimony pentafluoride), to catalyse the phosphorylation of anisole, with phosphorylation product isolation.

Examples 5 and 6 illustrate the use of a Brönsted superacid to catalyse the phosphorylation of o-xylene with partial recovery of superacid. Phosphorylation product and superacid analyses are by $^{31}P$ and $^{19}F$ nmr respectively.

Examples 7 and 8 illustrate the use of perfluorinated resin sulphonic acid NAFION 511 to catalyse the phosphorylation of toluene and o-xylene over several cycles with regeneration of the superacid. Product analysis is by $^{31}P$ nmr.

Example 9 illustrates the use of perfluorinated resin sulphonic acid NAFION 511 to catalyse the phosphorylation of toluene, with isolation of the phosphorylation product.

NAFION 511 was supplied by Du Pont Inc. USA.

Trifluoromethanesulphonic acid was supplied by Fluorochem Ltd.

All operations in the following Examples were carried out under a dry, inert atmosphere, using carefully dried equipment and reagents.

## Example 1

A mixture of dry o-xylene (21.2 g, 0.2 mole), freshly distilled phosphorus trichloride (82.4 g, 0.6 mole) and trifluoromethanesulphonic acid (3.4 g, 0.02 mole) was refluxed for 5 hours. The low boiling materials were removed under reduced pressure, and the resultant oil fractionally distilled under reduced pressure, yielding unreacted o-xylene (5.7 g) and 3,4-xylyl phosphonous dichloride (9.8 g, bp 100—102°C at 0.5 mm Hg). This is equivalent to 33% yield at 73% conversion of o-xylene. The undistillable residue was treated with water, broken up and washed with acetone. The solid residue (1.5 g, mp 211—214°C) was consistent with di(3,4-xylyl)phosphinic acid.

## Example 2

A mixture of dry toluene, (18.4 g, 0.2 mole), freshly prepared phosphorus trichloride (82.4 g, 0.6 mole) and trifluoromethanesulphonic acid (1.7 g, 0.01 mole) was refluxed for 8 hours. The work-up was as described in Example 1. Fractional distillation produced unreacted toluene (2.2 g) and a mixture (9.6 g) of 90% p- and 10% of o-tolylphosphonous dichloride (b.p. 66—72°C at 0.7—1.0 mm Hg). This is equivalent to 28% yield at 89% conversion of toluene. The undistillable residue was recrystallized from aqueous acetone, and was consistent with di-tolyl phosphinic acid (1.4 g).

## Example 3

A mixture of dry anisole (21.6 g, 0.2 mole), freshly prepared phosphorus trichloride (82 g, 0.6 mole) and trifluoromethanesulphonic acid (1.7 g, 0.01 mole) was refluxed for 5 hours. The work-up was as in Example 1. Fractional distillation produced unreacted anisole (5.1 g) and (p-anisyl phosphonous dichloride (12.9 g, b.p. 96—102°C at 0.15—0.20 mm Hg). This is equivalent to 40% yield at 76% conversion of anisole. Undistillable residue (4.6 g) which would not crystallise from aqueous acetone was consistent with di(p-anisyl)phosphinic acid.

## Example 4

Preparation of p-anisyl phosphonous dichloride. Dry anisole (21.6 g 0.2 mole) freshly distilled phosphorus trichloride (82 g 0.6 mole), trifluoromethane sulphonic acid (1.7 g 0.01 mole) and antimony pentafluoride on graphite (0.52 g @ 47% $SbF_5$, 0.001 mole) were refluxed together in a nitrogen atmosphere for 4 hours. Graphite was removed by filtration using a glass sinter of porosity 2 with Kieselguhr and the resulting yellow solution was concentrated by removing phosphorus trichloride and anisole under reduced pressure. The resulting red oil was distilled under vacuum (0.3 mm Hg, 84—88°C) to yield 11.71 g p-anisyl phosphonous dichloride. This represents 27.9% conversion of anisole.

Example 5

Preparation of 3,4 xylyl phosphonous dichloride. Dry o-xylene (63.6 g, 0.6 mole) freshly distilled phosphorus trichloride (247.2 g, 1.8 mole) and trifluoromethane sulphonic acid (10.17 g, 0.07 mole) were refluxed together in a nitrogen atmosphere for 5 hours. To the resulting yellow solution dry pentane (ca 250 ml) was added whereupon the reaction mixture separated into two phases. After separating the two phases each was analysed by $^{19}F$ and $^{31}P$ nmr. Quantitative superacid analysis was obtained by comparison with a standard trifluoromethane sulphonic acid solution, and this showed 61% of the trifluoromethane sulphonic acid to be in the heavy phase. Quantitative $^{31}P$ nmr in which 3,4 xylyl phosphonous dichloride was measured against added triphenyl phosphine showed that 48.5 g of 3,4 xylyl phosphonous dichloride (shift 162.5 ppm relative to phosphoric acid internal standard) was present in the light phase and that 10.6 g of 3,4 xylyl phosphonous dichloride was present in the heavy phase. This represents a o-xylene conversion of 47.6%.

Example 6

Preparation of 3,4 xylyl phosphonous dichloride. Dry o-xylene (63.6 g, 0.6 mole) freshly distilled phosphorus trichloride (247.2 g, 1.8 mole) and trifluoromethane sulphonic acid (10.17 g, 0.07 mole) were refluxed together in a nitrogen atmosphere for 5 hours. To the resulting yellow solution diethyl aniline (10.8 g, 0.72 mole) in pentane (90 ml) was added dropwise with stirring over a period of 1 hour. A further addition of pentane (90 ml) resulted in the efficient separation of a yellow oil in a heavy phase which was isolated by decanting off the light phase. Deionised water (60 ml) was added to the oil and the resulting solution became warm. Quantitative $^{19}F$ nmr in which trifluoromethane sulphonic acid was compared with a standard aqueous trifluoromethanesulphonic acid solution, showed 74% trifluoromethane sulphonic acid hydrate in the aqueous phase. Pentane, phosphorus trichloride and unreacted o-xylene were removed from the light phase under reduced pressure and the resulting yellow oil was distilled under vacuum (0.1 mm Hg, 100—115°C) to yield 31.04 g 3,4-xylyl phosphonous dichloride. This represents a conversion of o-xylene of 25%.

Example 7

100 g of NAFION 511 were converted from the potassium salt form to the acid form according to the following method suggested by Du Pont. The resin in the potassium form was placed in 200 ml of 4 M hydrochloric acid and stirred for 20 min. on a water bath under reflux. The mixture was then stirred and allowed to cool for 10 min., the hydrochloric acid decanted off and the solid washed once with 200 ml of de-ionised water. This process was repeated five times and the final rinse carried out until the washings were neutral to pH paper. The solid was dried in a vacuum oven for *ca* 24 hours at 110°—120°C. The NAFION $H^+$ was then allowed to cool under an atmosphere of dry nitrogen and was stored in a vacuum over phosphorus pentoxide.

The activity of the NAFION $H^+$ thus generated was determined by separately titrating three accurately weighed *ca* 2 g samples of the acid against standard sodium hydroxide solution. Each sample was treated with de-ionised water (50 ml) and solid sodium chloride (1—2 g) and heated for 30 min at 80—95°C. The samples were titrated while still hot with 0.1 M sodium hydroxide solution using phenolphthalein as indicator. The chosen end-point was the first which remained stable for 10 min. In this way, the equivalent weight (E.W.) of the acid was determined (i.e. the number of grams of the NAFION $H^+$ form which will completely neutralise one equivalent of base). The average of the three titrations against 0.1 M sodium hydroxide indicated an E.W. of 1107. Du Pont's specification for NAFION 511 is E.W. 1100. A glass extractor column, fitted with a reflux condenser, and which contained 32 g of the NAFION $H^+$ supported on a sintered glass disc (porosity 2) was set up above a round bottomed reaction vessel in an oil bath. The reaction vessel was charged with toluene (26 g, 0.28 mole) and phosphorus trichloride (47 g, 0.34 mole), and the mixture was refluxed for 17 hours at 91—106°C. The loading of the catalyst is best expressed in terms of the number of moles of sulphonic acid groupings —$SO_3H$ in the charge of NAFION resin per 100 mole of aromatic compound in the reaction mixture. In this case, taking into account the determined activity of the resin acid, the loading of NAFION $H^+$ catalyst is 10 mole% of toluene. Following the period of reflux, the column was cooled and washed with 2 × 10 ml toluene, in order to remove any adhered product, and the resultant yellow solution was analysed by $^{31}P$ nmr spectroscopy, which indicated a yield of (p-tolyl)phosphonous dichloride (shift = 161.4 ppm relative to phosphoric acid) of 85% and (o-tolyl)phosphorous dichloride (shift = 162.8 ppm relative to phosphoric acid) of 5%, for a toluene conversion of 26%.

The NAFION $H^+$, while still in the column, was treated with 2 × 100 ml of methanol, in order to remove traces of toluene, phosphorus trichloride, etc, and then removed and treated with 4 M hydrochloric acid in the manner described in the first paragraph of this Example, thoroughly washed with de-ionised water and vacuum dried at *ca* 110—120°C. Three samples of *ca* 2 g were removed, for titrations to determine the E.W. of the resin. The regenerated catalyst was then made up to 32 g with fresh NAFION $H^+$ prepared as described in the first stage of the Example.

The catalytic phosphorylation was carried out in an identical manner for three additional cycles, and the NAFION regenerated as described at the end of each cycle. Reagent and catalyst loadings, reaction conditions, catalyst activity and product analyses are presented in the following Table 1:

TABLE 1

| Cycle | NAFION $H^+$ E.W. | NAFION $H^+$ g | Toluene ml. | $PCl_3$ ml. | Catalyst Load M% | T°C | Time hrs. | Conversion % | Yield p-Product % | Yield o-Product % |
|---|---|---|---|---|---|---|---|---|---|---|
| 1 | 1107 | 32 | 30 | 30 | 10 | 91—106 | 17 | 26 | 85 | 5 |
| 2 | 1102 | 32 | 30 | 30 | 10 | 91—106 | 20 | 33 | 82 | 10 |
| 3 | 1088 | 32 | 30 | 30 | 10 | 91—106 | 15 | 24 | 83 | 10 |
| 4 | 1081 | 32 | 30 | 30 | 10 | 91—106 | 16 | 20 | 85 | 5 |
| 5 | 1080 | — | — | — | — | — | — | — | — | — |

Example 8

The experimental procedures outlined in Example 7 were repeated, but o-xylene was used in place of toluene, and the phosphorylation reaction was carried out over three cycles with regeneration of the NAFION 511 catalyst between cycles. The NAFION 511 used in this Example is from the same stock as that employed for the four cycles of Example 7, so that the sample of catalyst used in the first cycle of o-xylene phosphorylation is, apart from the 6 g analytical quantity made up from unused stock, the same material as that regenerated after the fourth cycle of toluene phosphorylation of Example 7. Reagent and catalyst loadings, reaction conditions, conversions of o-xylene and yields of (3,4-xylyl) phosphonous dichloride are presented in Table 2. Product analysis is by $^{31}P$ nmr spectroscopy, measuring relative to phosphorus trichloride.

TABLE 2

| Cycle | NAFION 511 E.W. | NAFION 511 g | o-oxylene ml | $PCl_3$ ml | Catalyst Load M% | Temperature °C | Time hrs. | o-xylene conversion % | Yield of (3-4-xylyl) $PCl_2$ % |
|---|---|---|---|---|---|---|---|---|---|
| 1 | 1080 | 32 | 30 | 30 | 12 | 87—110 | 24 | 16 | 99 |
| 2 | 1034 | 32 | 30 | 30 | 12 | 87—105 | 24 | 13 | 99 |
| 3 | 1039 | 32 | 30 | 30 | 12 | 87—115 | 24 | 20 | 99 |

Example 9

Using the apparatus described previously in Example 7, NAFION $H^+$ 511 (27 g 9 M%) was subjected for *ca* 12 hrs. to a refluxing mixture of toluene (26 g 0.28 mole) and phosphorus trichloride (47 g 0.3 mole). The solution was then allowed to cool to ambient temperature and the NAFION $H^+$ 511 column was washed with 2 x 20 ml toluene. Toluene and phosphorus trichloride were removed under reduced pressure and the resulting oil distilled under vacuum (1—1.5 mm Hg, 80—90°C) whereupon 4.82 g p-tolyl phosphonous dichloride was obtained. This corresponds to a conversion of 10% of the toluene.

## Claims

1. A process for the preparation of an aromatic phosphonous dihalide which comprises reacting an aromatic compound with a phosphorus trihalide in the presence of a superacid, said superacid being an acid having an Hammett acidity function, Ho, which is more negative than −12.

2. A process as claimed in claim 1 wherein the aromatic phosphonous dihalide has the general formula

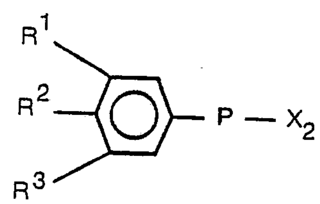

wherein $R^1$, $R^2$ and $R^3$ are electron-donating substituents or hydrogen atoms, or either $R^1$ or $R^3$ forms part of a fused alicyclic ring with $R^2$, and wherein X is a halogen atom, which process comprises contacting the compound

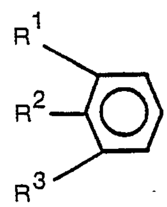

with a phosphorus trihalide in the presence of a superacid.

3. A process as claimed in claim 2 wherein the electron donating substituents $R_1$, $R_2$ and $R_3$ are selected from alkoxy and alkyl groups containing from 1 to 8 carbon atoms.

4. A process as claimed in claim 3 wherein the alkoxy groups are selected from methoxy, ethoxy, iso-propoxy and tertiary-butoxy; and the alkyl groups are selected from methyl, ethyl and propyl.

5. A process as claimed in any one of the preceding claims the phosphorus halide is phosphorus trichloride.

6. A process as claimed in any one of the preceding claims wherein the superacid is a Bronsted monomeric acid selected from the group consisting pyrosulphuric acid $H_2S_2O_7$; fluorosulphonic acid $FSO_3H$; chlorosulphonic acid $ClSO_3H$; and a partially or completely halogenated sulphonic acid $XCF_2SO_3H$ where X is F, Cl, Cn $F_2n + 1$ where n is 1 to 12, $H(CF_2CF_2)_n$ where n is 1 to 5, and $(CF_3)_2$—CF—.

7. A process as claimed in any one of claims 1 to 5 wherein the superacid is a solid perfluorinated resin-sulphonic acid.

8. A process as claimed in any one of claims 1 to 5 wherein the superacid is a combination of a Bronsted monomeric superacid with a Lewis acid or a combination of a Bronsted monomeric acid which is not a superacid with a Lewis acid, provided that the combination leads to an acid composition having an Hammett activity, Ho, which is more negative than −12.

9. A process as claimed in claim 8 wherein the proportion of Lewis acid to Bronsted acid is within the range 1:10 to 1:100.

10. A process as claimed in claim 8 or claim 9 wherein the superacid comprises combinations selected from fluorosulphonic acid with titanium tetrafluoride, niobium pentafluoride, tantalum pentafluoride, antimony pentafluoride, antimony pentafluoride — sulphur trioxide and molybdenum hexafluoride; chlorosulphonic acid with gallium trichloride, and antimony pentafluoride; trifluoromethanesulphonic acid with titanium tetrafluoride, zirconium tetrafluoride, vanadium pentafluoride, tantalum pentafluoride, arsenic pentafluoride, and antimony pentafluoride; and hydrofluoric acid with boron trifluoride, niobium pentafluoride and tantalum pentafluoride.

11. A process as claimed in any one of claims 1 to 6 and 8 to 10 which comprises the steps of (1) refluxing in the absence of a solvent the aromatic compound, the phosphorus trihalide and a superacid

comprising a Bronsted monomeric acid or a combination of Bronsted monomeric acid and a Lewis acid to give a reaction product mixture comprising an aromatic phosphonous dihalide, and unreacted super acid, aromatic compound and phosphorus trihalide (2) distilling the reaction product mixture under reduced pressure to remove unreacted super acid, unreacted aromatic compound and unreacted phosphorus trihalide, and subsequently distilling the residual mixture under vacuum to isolate the aromatic phosphonous dihalide.

12. A process as claimed in any one of claims 1 to 6 and 8 to 10 which comprises the steps of (1) refluxing in the absence of a solvent the aromatic compound, the phosphorus trihalide and a superacid comprising a Bronsted monomeric acid or a combination of Bronsted monomeric acid and a Lewis acid to give a reaction product mixture comprising an aromatic phosphonous dihalide, unreacted aromatic compound, unreacted phosphorus trihalide, and residual superacid, (2) adding to the reaction product mixture a hydrocarbon solvent to form a light phase comprising hydrocarbon solvent, a minor proportion of unreacted superacid, unreacted aromatic compound, unreacted phosphorus trihalide and the aromatic phosphonous dihalide together with a heavy phase comprising a major proportion of unreacted superacid and separating said phases, (3) distilling said light phase under reduced pressure to remove hydrocarbon solvent, aromatic compound and phosphorus trihalide, subsequently distilling the residual mixture under vacuum to isolate the aromatic phosphonous dihalide, hydrolysing the resultant distillation residue to liberate any superacid/phosphonous dihalide complex as a superacid hydrate, converting said hydrate to the anhydrous form and (4) optionally recycling the heavy phase to the reaction product mixture.

13. A process as claimed in any one of claims 1 to 6 and 8 to 10 which comprises the steps of (1) refluxing in the absence of a solvent the aromatic compound, the phosphorus trihalide and a superacid comprising a Bronsted monomeric acid or a combination of Bronsted monomeric acid and a Lewis acid to give a reaction product mixture comprising an aromatic phosphonous dihalide, unreacted aromatic compound, unreacted phosphorus trihalide, and residual superacid, (2) adding to the reaction product mixture an organic base, with optionally a hydrocarbon solvent, to form a light phase comprising hydrocarbon solvent (if present), unreacted phosphorus trihalide and the aromatic phosphonous dihalide, together with a heavy phase comprising a complex of the superacid and the organic base, and separating said phases, (3) distilling said light phase under reduced pressure to remove hydrocarbon solvent (if present), aromatic compound and phosphorus trihalide, subsequently distilling the residual mixture under vacuum to isolate the aromatic phosphonous dihalide, hydrolysing the resultant distillation residue to break-down any superacid/phosphonous dihalide complex to liberate the superacid as a hydrate, converting said hydrate to anhydrous form and (4) hydrolysing the heavy phase to give a superacid hydrate, and converting said hydrate to the anhydrous form.

14. A process as claimed in claim 7 which comprises the steps of (1) refluxing in the absence of a solvent the aromatic compound, the phosphorus trihalide and a superacid comprising a solid perfluorinated resin sulphonic acid to give a reaction product mixture comprising an aromatic phosphonous dihalide, unreacted aromatic compound, unreacted phosphorus trihalide and residual solid superacid, (2) separating the solid superacid from the remainder of the reaction product mixture, washing the solid superacid with excess aromatic compound to remove residual aromatic phosphonium dihalide, adding washings to the remainder of the reaction product mixture, hydrolysing the washed solid superacid to regenerate said superacid, and (3) distilling remainder of reaction product mixture and aforesaid washings under reduced pressure to remove aromatic compound and phosphorus trihalide, and subsequently applying vacuum distillation to isolate the aromatic phosphonous dihalide.

15. A process as claimed in any one of the preceding claims wherein the proportion of superacid is in the range 0.05 to 0.25 moles of superacid per mole of aromatic compound starting material, with the proviso that when the superacid is a resin sulphonic acid the aforesaid molar proportion refers to the number of moles of sulphonic acid groupings ($SO_3H$) per 100 moles of aromatic compound.

**Revendications**

1. Procédé de préparation d'un dihalogénure phosphoneux aromatique, qui comprend la réaction d'un composé aromatique avec un trihalogénure de phosphore en présence d'un superacide, ce superacide étant un acide ayant une fonction d'acidité de Hammett, Ho, qui est plus négative que —12.

2. Procédé suivant la revendication 1, dans lequel le dihalogénure phosphoneux aromatique est de la formule générale

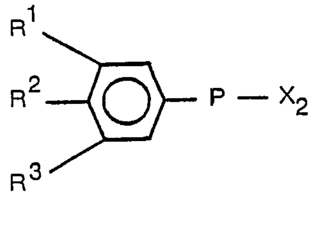

où $R^1$, $R^2$ et $R^3$ sont des substituants donneurs d'électrons ou atomes d'hydrogène, ou bien $R^1$ ou $R^3$ fait partie d'un radical alicyclique condensé avec $R^2$ et X est un atome d'halogène, lequel procédé comprend la mise en contact du composé

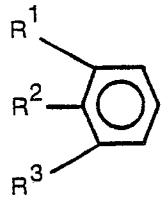

avec un trihalogénure de phosphore en présence d'un superacide.

3. Procédé suivant la revendication 2, dans lequel les substituants donneurs d'électrons $R_1$, $R_2$ et $R_3$ sont choisis parmi les radicaux alcoxy et alcoyle comptant 1 à 8 atomes de carbone.

4. Procédé suivant la revendication 3, dans lequel les radicaux alcoxy sont choisis entre les radicaux méthoxy, éthoxy, isopropoxy et t-butoxy et les radicaux alcoyle sont choisis entre les radicaux méthyle, éthyle et propyle.

5. Procédé suivant l'une quelconque des revendications précédentes, dans lequel l'halogénure de phosphore est le trichlorure de phosphore.

6. Procédé suivant l'une quelconque des revendications précédentes, dans lequel le superacide est un acide de Brönsted monomère choisi parmi l'acide pyrosulfurique $H_2S_2O_7$; l'acide fluorosulfonique $FSO_3H$, l'acide chlorosulfonique $ClSO_3H$ et un acide sulfonique partiellement ou complètement halogéné $XCF_2SO_3H$ où X représente F, Cl, $C_nF_{2n+1}$ où n a une valeur de 1 à 12, $H(CF_2CF_2)_n$ où n a une valeur de 1 à 5 et $(CF_3)_2$—CF—.

7. Procédé suivant l'une quelconque des revendications 1 à 5, dans lequel le superacide est un acide résinesulfonique perfluoré solide.

8. Procédé suivant l'une quelconque des revendications 1 à 5, dans lequel le superacide est une combinaison d'un superacide de Brönsted monomère avec un acide de Lewis ou une combinaison d'un acide de Brönsted monomère qui n'est pas un superacide avec un acide de Lewis, étant entendu que la combinaison conduit à une composition acide ayant une acidité de Hammett, Ho, qui est plus négative que −12.

9. Procédé suivant la revendication 8, dans lequel le rapport de l'acide de Lewis à l'acide de Brönsted est situé dans l'intervalle de 1:10 à 1:100.

10. Procédé suivant la revendication 8 ou 9, dans lequel le superacide comprend des combinaisons choisies entre l'acide fluorosulfonique avec le tétrafluorure de titane, le pentafluorure de niobium, le pentafluorure de tantale, le pentafluorure d'antimoine, le pentafluorure d'antimoine — trioxyde de soufre et l'hexafluorure de molybdène; l'acide chlorosulfonique avec le trichlorure de gallium et le pentafluorure d'antimoine, l'acide trifluorométhanesulfonique avec le tétrafluorure de titane, le tétrafluorure de zirconium, le pentafluorure de vanadium, le pentafluorure de tantale, le pentafluorure d'arsenic et le pentafluorure d'antimoine; et l'acide fluorhydrique avec le trifluorure de bore, le pentafluorure de niobium et le pentafluorure de tantale.

11. Procédé suivant l'une quelconque des revendications 1 à 6 et 8 à 10, qui comprend les stades (1) de chauffer au reflux en l'absence de solvant le composé aromatique, le trihalogénure de phosphore et un superacide comprenant un acide de Brönsted monomère ou une combinaison d'acide de Brönsted monomère et d'un acide de Lewis pour former un mélange de produit de réaction comprenant un dihalogénure phosphoneux aromatique ainsi que du superacide, du composé aromatique et du trihalogénure de phosphore qui n'ont pas réagi, (2) de distiller le mélange de produit de réaction sous pression réduite pour chasser le superacide qui n'a pas réagi, le composé aromatique qui n'a pas réagi et le trihalogénure de phosphore qui n'a pas réagi et ensuite de distiller le mélange résiduel sous vide pour isoler le dihalogénure phosphoneux aromatique.

12. Procédé suivant l'une quelconque des revendications 1 à 6 et 8 à 10 qui comprend les stades (1) de chauffer au reflux en l'absence de solvant le composé aromatique, le trihalogénure de phosphore et un superacide comprenant un acide de Brönsted monomère ou une combinaison d'un acide de Brönsted monomère et d'un acide de Lewis pour former un mélange de produit de réaction comprenant un dihalogénure phosphoneux aromatique, du composé aromatique qui n'a pas réagi, du trihalogénure de phosphore qui n'a pas réagi et du superacide résiduel, (2) d'ajouter au mélange de produit de réaction un solvant hydrocarboné pour former une phase légère comprenant du solvant hydrocarboné, une proportion mineure de superacide qui n'a pas réagi, du composé aromatique qui n'a pas réagi, du trihalogénure de phosphore qui n'a pas réagi et le dihalogénure phosphoneux aromatique, outre une phase dense comprenant une proportion majeure de superacide qui n'a pas réagi et de séparer les phases, (3) de distiller la phase légère sous pression réduite pour chasser le solvant hydrocarboné, le composé aromatique et le trihalogénure de phosphore, de distiller ensuite le mélange résiduel sous vide pour isoler le dihalogénure phosphoneux aromatique, d'hydrolyser le résidu de distillation résultant pour dégager le complexe superacide/dihalogénure phosphoneux éventuel sous forme de superacide

hydraté, de convertir l'hydrate en la forme anhydre et (4) éventuellement de recycler la phase dense au mélange de produit de réaction.

13. Procédé suivant l'une quelconque des revendications 1 à 6 et 8 à 10, qui comprend les stades (1) de chauffer au reflux en l'absence de solvant le composé aromatique, le trihalogénure de phosphore et un superacide comprenant un acide de Brönsted monomère ou une combinaison d'acide de Brönsted monomère et d'un acide de Lewis pour former un mélange de produit de réaction comprenant un dihalogénure phosphoneux aromatique, du composé aromatique qui n'a pas réagi, du trihalogénure de phosphore qui n'a pas réagi et du superacide résiduel, (2) d'ajouter au mélange de produit de réaction une base organique avec éventuellement un solvant hydrocarboné, pour former une phase légère comprenant le solvant hydrocarboné (éventuel), du trihalogénure de phosphore qui n'a pas réagi et le dihalogénure phosphoneux aromatique, outre une phase dense comprenant un complexe du superacide et de la base organique et de séparer les phases, (3) de distiller la phase légère sous pression réduite pour chasser le solvant hydrocarboné (éventuel), le composé aromatique et le trihalogénure de phosphore, de distiller ensuite le mélange résiduel sous vide pour isoler le dihalogénure phosphoneux aromatique, d'hydrolyser le résidu de distillation résultant pour détruire le complexe superacide/dihalogénure phosphoneux éventuel pour dégager le superacide sous forme d'un hydrate, de convertir l'hydrate en la forme anhydre et (4) d'hydrolyser la phase dense pour obtenir un superacide hydraté et de convertir l'hydrate en la forme anhydre.

14. Procédé suivant la revendication 7, qui comprend les stades (1) de chauffer au reflux en l'absence d'un solvant le composé aromatique, le trihalogénure de phosphore et un superacide comprenant un acide résinesulfonique perfluoré solide pour former un mélange de produit de réaction comprenant un dihalogénure phosphoneux aromatique, du composé aromatique qui n'a pas réagi, du trihalogénure de phosphore qui n'a pas réagi et du superacide solide résiduel, (2) de séparer le superacide solide du reste du mélange de produit de réaction, de laver le superacide solide avec un excès de composé aromatique pour séparer le dihalogénure phosphoneux aromatique résiduel, d'ajouter les liqueurs de lavage au reste du mélange de produit de réaction, d'hydrolyser le superacide solide lavé afin de régénérer le superacide et (3) de distiller le reste du mélange de produit de réaction et des liqueurs de lavage ci-dessus sous pression réduite pour séparer le composé aromatique et le trihalogénure de phosphore et d'effectuer ensuite la distillation sous vide pour isoler le dihalogénure phosphoneux aromatique.

15. Procédé suivant l'une quelconque des revendications précédentes, dans lequel la proportion de superacide est située dans l'intervalle de 0,05 à 0,25 mole de superacide par mole de composé aromatique de départ, étant entendu que lorsque le superacide est un acide résinesulfonique, la proportion molaire précitée explicite le nombre de moles de radicaux acide sulfonique ($SO_3H$) pour 100 moles de composé aromatique.

**Patentansprüche**

1. Verfahren zur Herstellung eines aromatischen Phosphonigsäuredihalogenids, bei dem eine aromatischen Verbindung in Gegenwart einer Supersäure mit einem Phosphortrihalogenid umgesetzt wird, wobei die Supersäure eine Säure ist, die eine Hammett-Aciditätsfunktion, Ho, die negativer als $-12$ ist, hat.

2. Verfahren nach Anspruch 1, bei dem das aromatische Phosphonigsäuredihalogenid die allgemeine Formel

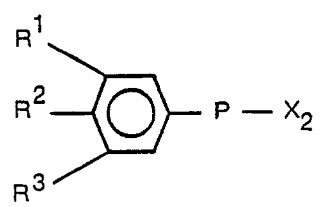

hat, worin $R^1$, $R^2$ und $R^3$ elektronenspendende Substituenten oder Wasserstoffatome sind oder entweder $R^1$ oder $R^3$ mit $R^2$ einen Teil eines kondensierten, alicyclischen Ringes bildet und worin X ein Halogenatom ist, wobei in dem Verfahren die Verbindung

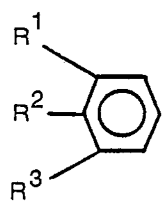

in Gegenwart einer Supersäure mit einem Phosphortrihalogenid in Berührung gebracht wird.

3. Verfahren nach Anspruch 2, bei dem die elektronenspendenden Substituenten $R^1$, $R^2$ und $R^3$ aus Alkoxy- und Alkylgruppen, die 1 bis 8 Kohlenstoffatome enthalten, ausgewählt sind.

4. Verfahren nach Anspruch 3, bei dem die Alkoxygruppen aus der Methoxy-, Ethoxy-, Isopropoxy- und tert.-Butoxygruppe ausgewählt sind und die Alkylgruppen aus der Methyl-, Ethyl- und Propylgruppe ausgewählt sind.

5. Verfahren nach einem der vorhergehenden Ansprüche, bei dem das Phosphorhalogenid Phosphortrichlorid ist.

6. Verfahren nach einem der vorhergehenden Ansprüche, bei dem die Supersäure eine monomere Brönsted-Säure ist, die aus der aus Pyroschwefelsäure $H_2S_2O_7$; Fluosulfonsäure $FSO_3H$; Chlorsulfonsäure $ClSO_3H$ und einer teilweise oder vollständig halogenierten Sulfonsäure $XCF_2SO_3H$, worin X F, Cl, $C_n F_{2n+1}$, worin n 1 bis 12 ist, $H(CF_2CF_2)_n$, worin n 1 bis 5 ist, oder $(CF_3)_2$—CF— ist, bestehenden Gruppe ausgewählt ist.

7. Verfahren nach einem der Ansprüche 1 bis 5, bei dem die Supersäure eine feste, perfluorierte (Kunst)harzsulfonsäure ist.

8. Verfahren nach einem der Ansprüche 1 bis 5, bei dem die Supersäure eine Kombination einer monomeren Brönsted-Supersäure mit einer Lewis-Säure oder eine Kombination einer monomeren Brönsted-Säure, die keine Supersäure ist, mit einer Lewis-Säure ist, sofern die Kombination zu einer Säurezusammensetzung führt, die eine Hammett-Acidität, Ho, die negativer als —12 ist, hat.

9. Verfahren nach Anspruch 8, bei dem das Verhältnis der Lewis-Säure zu der Brönsted-Säure innerhalb des Bereichs von 1:10 bis 1:100 liegt.

10. Verfahren nach Anspruch 8 oder 9, bei dem die Supersäure aus Kombinationen besteht, die aus Fluorsulfonsäure mit Titantetrafluorid, Niobpentafluorid, Tantalpentafluorid, Antimonpentafluorid, Antimonpentafluorid-Schwefeltrioxid und Molybdänhexafluorid; Chlorsulfonsäure mit Galliumtrichlorid und Antimonpentafluorid; Trifluormethansulfonsäure mit Titantetrafluorid, Zirkoniumtetrafluorid, Vanadiumpentafluorid, Tantalpentafluorid, Arsenpentafluorid und Antimonpentafluorid sowie Fluorwasserstoffsäure mit Bortrifluorid, Niobpentafluorid und Tantalpentafluorid ausgewählt sind.

11. Verfahren nach einem der Ansprüche 1 bis 6 und 8 bis 10, das die folgenden Schritte enthält:

(1) Rückflußkochen der aromatischen Verbindung, des Phosphortrihalogenids und einer Supersäure, die aus einer monomeren Brönsted-Säure oder einer Kombination einer monomeren Brönsted-Säure und einer Lewis-Säure besteht, in Abwesenheit eines Lösungsmittels, wobei eine Reaktionsproduktmischung erhalten wird, die ein aromatisches Phosphonigsäuredihalogenid und unumgesetzte Supersäure, unumgesetzte aromatische Verbindung und unumgesetztes Phosphortrihalogenid enthält,

(2) Destillieren der Reaktionsproduktmischung unter vermindertem Druck, wobei unumgesetzte Supersäure, unumgesetzte aromatische Verbindung und unumgesetztes Phosphortrihalogenid entfernt werden, und nachfolgendes Destillieren der restlichen Mischung unter Vakuum, wobei das aromatische Phosphonigsäuredihalogenid isoliert wird.

12. Verfahren nach einem der Ansprüche 1 bis 6 und 8 bis 10, das die folgenden Schritte enthält:

(1) Rückflußkochen der aromatischen Verbindung, des Phosphortrihalogenids und einer Supersäure, die aus einer monomeren Brönsted-Säure oder einer Kombination einer monomeren Brönsted-Säure und einer Lewis-Säure besteht, in Abwesenheit eines Lösungsmittels, wobei eine Reaktionsproduktmischung erhalten wird, die ein aromatisches Phosphonigsäuredihalogenid, unumgesetzte aromatische Verbindung, unumgesetztes Phosphortrihalogenid und restliche Supersäure enthält,

(2) Zugabe eines Kohlenwasserstofflösungsmittels zu der Reaktionsproduktmischung, wobei eine leichte Phase, die Kohlenwasserstofflösungsmittel, einen kleineren Anteil unumgesetzter Supersäure, unumgesetzte aromatische Verbindung, unumgesetztes Phosphortrihalogenid und das aromatische Phosphonigsäuredihalogenid enthält, zusammen mit einer schweren Phase, die einen größeren Anteil unumgesetzter Supersäure enthält, gebildet wird, und Trennen dieser Phasen,

(3) Destillieren der leichten Phase unter vermindertem Druck, wobei Kohlenwasserstofflösungsmittel, aromatische Verbindung und Phosphortrihalogenid entfernt werden, nachfolgendes Destillieren der restlichen Mischung unter Vakuum, wobei das aromatische Phosphonigsäuredihalogenid isoliert wird, Hydrolysieren des erhaltenen Destillationsrückstands, wobei jeder Supersäure/Phosphonigsäuredihalogenid-Komplex in Form eines Supersäurehydrats freigesetzt wird, Umwandeln dieses Hydrats in die wasserfreie Form und

(4) gegebenenfalls Rückführung der schweren Phase zu der Reaktionsproduktmischung.

13. Verfahren nach einem der Ansprüche 1 bis 6 und 8 bis 10, das die folgenden Schritte enthält:

(1) Rückflußkochen der aromatischen Verbindung, des Phosphortrihalogenids und einer Supersäure, die aus einer monomeren Brönsted-Säure oder einer Kombination einer monomeren Brönsted-Säure und einer Lewis-Säure besteht, in Abwesenheit eines Lösungsmittels, wobei eine Reaktionsproduktmischung erhalten wird, die ein aromatisches Phosphonigsäuredihalogenid, unumgesetzte aromatische Verbindung, unumgesetztes Phosphortrihalogenid und restliche Supersäure enthält,

(2) Zugabe einer organischen Base — gegebenenfalls zusammen mit einem Kohlenwasserstofflösungsmittel — zu der Reaktionsproduktmischung, wobei eine leichte Phase, die Kohlenwasserstofflösungsmittel (falls vorhanden), unumgesetztes Phosphortrihalogenid und das aromatische Phosphonigsäuredihalogenid enthält, zusammen mit einer schweren Phase, die einen Komplex der Supersäure und der organischen Base enthält, gebildet wird, und Trennen dieser Phasen,

(3) Destillieren der leichten Phase unter vermindertem Druck, wobei Kohlenwasserstofflösungsmittel (falls vorhanden), aromatische Verbindung und Phosphortrihalogenid entfernt werden, nachfolgendes Destillieren der restlichen Mischung unter Vakuum, wobei das aromatischen Phosphonigsäuredihalogenid isoliert wird, Hydrolysieren des erhaltenen Destillationsrückstands, wobei jeder Supersäure/Phosphonigsäuredihalogenid-Komplex unter Freisetzung der Supersäure in Form eines Hydrats gespalten wird, Umwandeln dieses Hydrats in die wasserfreie Form und

(4) Hydrolysieren der schweren Phase, wobei ein Supersäurehydrat erhalten wird, und Umwandeln dieses Hydrats in die wasserfreie Form.

14. Verfahren nach Anspruch 7, das die folgenden Schritte enthält:

(1) Rückflußkochen der aromatischen Verbindung, des Phosphortrihalogenids und einer Supersäure, die aus einer festen, perfluorierten (Kunst)harzsulfonsäure besteht, in Abwesenheit eines Lösungsmittels, wobei eine Reaktionsproduktmischung erhalten wird, die ein aromatisches Phosphonigsäuredihalogenid, unumgesetzte aromatische verbindung, unumgesetztes Phosphortrihalogenid und restliche feste Supersäure enthält,

(2) Abtrennen der festen Supersäure von dem Rückstand der Reaktionsproduktmischung, Waschen der festen Supersäure mit überschüssiger aromatischer Verbindung, wobei restliches aromatisches Phosphonigsäuredihalogenid entfernt wird, Zugabe der Waschflüssigkeit zu dem Rückstand der Reaktionsproduktmischung, Hydrolysieren der gewaschenen festen Supersäure, wobei die Supersäure regeneriert wird, und

(3) Destillieren des Rückstands der Reaktionsproduktmischung und der vorstehend erwähnten Waschflüssigkeit unter vermindertem Druck, wobei aromatische Verbindung und Phosphortrihalogenid entfernt werden, und nachfolgendes Durchführen einer Vakuumdestillation, wobei das aromatische Phosphonigsäuredihalogenid isoliert wird.

15. Verfahren nach einem der vorhergehenden Ansprüche, bei dem der Anteil der Supersäure in dem Bereich von 0,05 bis 0,25 mol Supersäure pro Mol der als Ausgangsmaterial eingesetzten aromatischen Verbindung liegt, und zwar unter der Bedingung, daß sich der vorstehend erwähnte, molare Anteil auf die Molzahl der Sulfonsäuregruppierungen ($SO_3H$) pro 100 mol der aromatischen Verbindung bezieht, wenn die Supersäure eine (Kunst)harzsulfonsäure ist.